Europäisches Patentamt

European Patent Office

Office européen des brevets

(19)

(11) Publication number: **0 392 650**
**A1**

# EUROPEAN PATENT APPLICATION

(12)

(21) Application number: **90301433.0**

(22) Date of filing: **12.02.90**

(51) Int. Cl.⁵: **G01L 23/22, F02B 77/08**

(30) Priority: **14.04.89 GB 8908531**

(43) Date of publication of application:
**17.10.90 Bulletin 90/42**

(84) Designated Contracting States:
**DE FR GB IT**

(71) Applicant: **LUCAS INDUSTRIES public limited company**
**Great King Street**
**Birmingham, B19 2XF West Midlands(GB)**

(72) Inventor: **Pinnock, Robert Andrew**
**153 Mary Vale Road, Bournville**
**Birmingham B30 2DN(GB)**

(74) Representative: **Thompson, George Michael et al**
**MARKS & CLERK Alpha Tower Suffolk Street Queensway**
**Birmingham B1 1TT(GB)**

(54) Engine knock sensing system.

(57) A knock sensing system for an internal combustion engine includes an optical sensor 10, 12 which provides an electrical signal dependant upon the radiation produced by the combustion of fuel in an engine cylinder and electrical circuit means 15, 16, 17 which produces an output signal when there is an abrupt change in the slope of the rising portion of signal produced by the sensor, the abrupt change in slope indicating knock in the engine cylinder.

FIG.I.

EP 0 392 650 A1

## ENGINE KNOCK SENSING SYSTEM

This invention relates to a knook sensing system for an internal combustion engine and to a method of detecting knock.

Various systems are known for detecting the onset of "knock" in an internal combustion engine. One such system utilises an accelerometer or accelerometers which is/are mounted on the engine structure and which sense the characteristic frequency which is generated when engine knock occurs. The advantage of such a system is that the accelerometer is mounted on the engine structure but the disadvantage is that the signals generated have to be very carefully processed in order to distinguish the signals which are produced when engine knock occurs from mechanical vibration and other noise.

Another system utilises a probe to sense the rapid fluctuations of pressure which occur when engine knock takes place after the peak pressure has been attained. The probes are however relatively expensive and at least in their present form are not considered suitable for application to production engines.

Another system utilises an optical sensor which observes the radiation which is generated within the combustion chamber and which in the same manner as the pressure sensor, exhibits rapid fluctuation of the signal after the peak signal, when engine knock takes place. The probe as compared with the pressure sensor is of relatively simple construction.

In each of the systems described there must be appreciable engine knock before detection of the knock can reliably take place and in engine management systems which incorporate knock sensors it is the practice to advance the timing of ignition until engine knock occurs and then to retard the timing, this process being repeated at regular intervals.

The shape of the output signal from an optical type knock sensor roughly corresponds to the shape of the output signal from a pressure type knock sensor. However, a careful examination of the output of an optical sensor reveals an abrupt change in the slope of the rising portion of the signal prior to the peak value of the signal, when the engine is knocking. The more severe the knock the earlier the change in slope takes place. Moreover, it is possible to discern the change in slope before the aforesaid rapid fluctuations in the signal occur so that the presence of the change in slope can more reliably indicate the onset of knock in an engine than is possible with the systems known.

According to the invention a knock sensing system for an internal combustion engine comprises an optical sensor for providing an electrical signal dependent upon the radiation produced in a cylinder of the engine, and means for detecting an abrupt change in the slope of the rising portion of the signal.

In the accompanying drawings:

Figure 1 shows a diagrammatic representation of the system,

Figures 2, 3 and 4 show curves indicating the level of light generated in an engine combustion chamber and also the pressure in the combustion chamber under different operating conditions, and

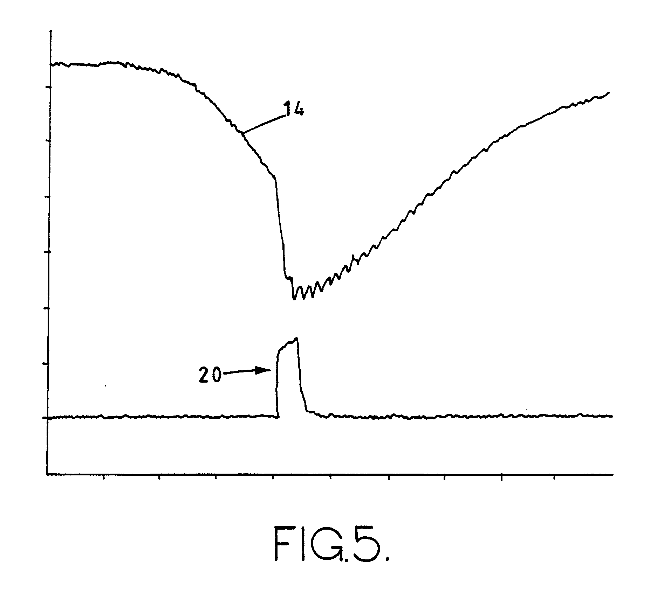

Figure 5 shows the output signal obtained from the system.

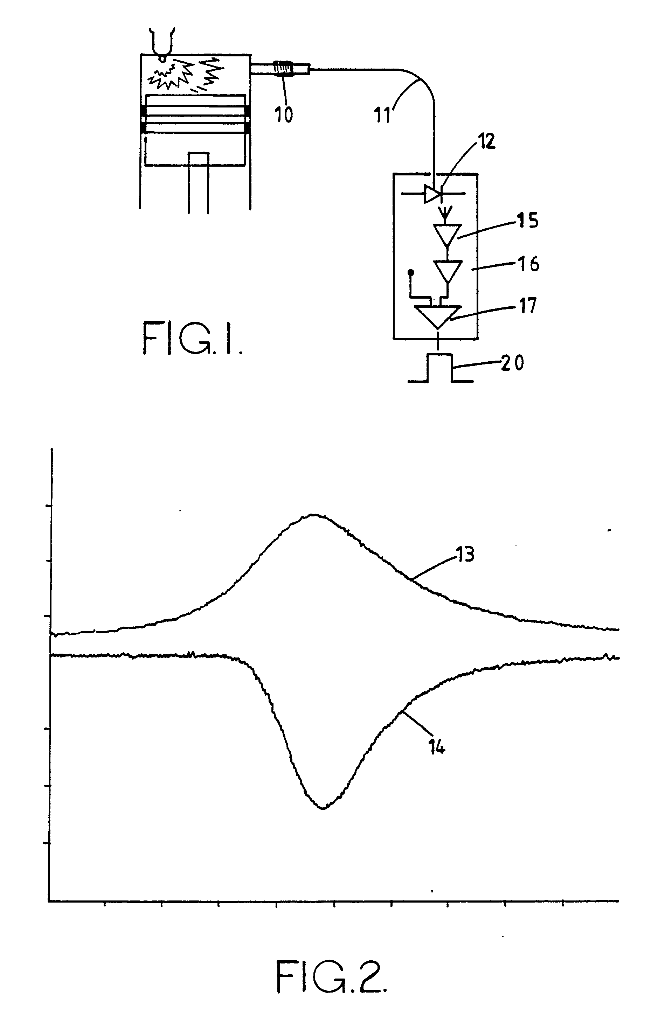

Referring to Figure 1 of the drawings the system comprises a probe 10 which essentially comprises a metal body screwed into the cylinder head of the engine the body defining a through bore in which is located a radiation transmitting rod such as quartz. The inner end of the rod constitutes a window through which radiation generated in the combustion chamber when fuel is ignited therein, can pass into the rod. The outer end of the rod is connected to an optical fibre 11 leading to a radiation detector 12 which is represented as a photo diode. The combustion chamber is provided with the usual spark plug and when a spark is generated, ignition of the air fuel mixture takes place and the result is an increase in the pressure within the combustion chamber.

The upper curve 13 in Figure 2 represents the variation in pressure which occurs within the engine combustion chamber as combustion of fuel takes place and the lower curve 14 which has been inverted for convenience, represents the output signal which is obtained from the photo diode 12. It will be seen that the two curves generally correspond with each other and in Figure 2 the engine is operating in a normal manner without engine knock.

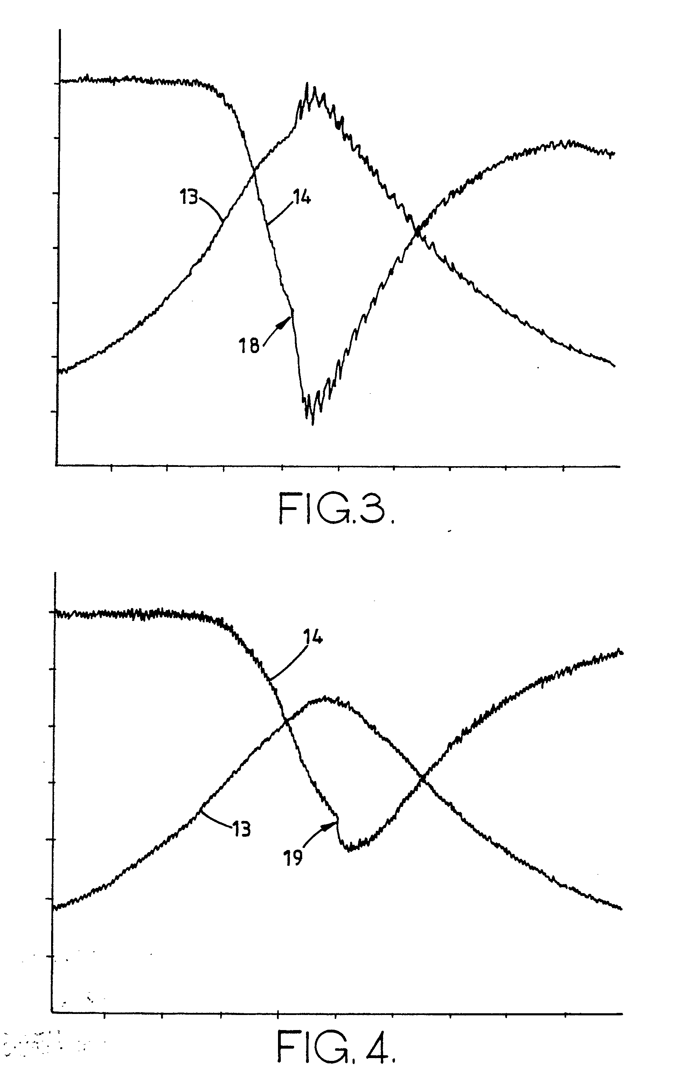

Figure 3 is similar to Figure 2 but in this instance moderate knock is occurring in the engine and both the pressure signal 13 and the optical signal 14 show the rapid fluctuations in pressure and light output characteristic of the situation when engine knock is taking place. Figure 4 corresponds to Figure 3 but as will be seen the rapid fluctuations in the signals which occur at and after the peak values can hardly be discerned. It will be noted, however, in both Figure 3 and 4 that prior to attaining the peak value the signal which is obtained from the photo diode 12 exhibits an abrupt change in slope. The point at which this occurs is indicated at 18 in Figure 3 and at 19 in Figure 4. It will be noted that the greater the degree of knock the earlier in the cycle does the change of slope occur. With the engine operating conditions shown in Figure 4 it would be extremely difficult using the conventional optical knock sensing system or pressure sensing system to determine whether engine knock is taking place. It is possible therefore by examining the optical signal in the manner described to obtain an early warning of the onset of engine knock.

One method of detecting the change in slope is diagrammically illustrated in Figure 1 and it comprises differentiating the signal from the photo diode in a differentiator 15, filtering the resulting signal in a filter 16 and then applying the filtered signal to one input of a comparator 17 the other input of which is maintained at a threshold level. The arrangement is such that an output signal 20 is obtained at the output of the comparator when the abrupt change in slope of the signal provided by the photo diode 12 occurs.

With the arrangement as described it is possible to obtain early warning of the onset of engine knock.

In some instances the filter 16 may not be required and in other instances it may be necessary to apply two stages of differentation. The probe 10 may be incorporated into the spark plug thereby avoiding the need to provide a further bore or drilling in the engine cylinder head. It will also be noted that the system operates with visible/near infra red radiation thereby enabling relatively inexpensive detecting components to be used in the sensor.

## Claims

1. A knock sensing system for an internal combustion engine comprising an optical sensor (10,12) for providing an electrical signal dependant upon the radiation produced in a cylinder of the engine characterised by means (15, 16, 17) for detecting an abrupt change in the slope of the rising portion of the signal.

2. A method of detecting the onset of knock in the combustion chamber of an internal combustion engine comprising observing the radiation produced in the combustion chamber of the engine using an optical sensor (10,12) which produces an electrical signal dependant upon the radiation characterised by examining the rising portion of the signal to detect an abrupt change in the slope therefore, the abrupt change of slope being an indication of knock.

3. A knock sensing system according to Claim 1 characterised in that said means includes a differentiating circuit (15) and a comparator (17).

4. A knock sensing system according to Claim 3 characterised by a filter (16) interposed between the differentiating circuit (15) and the comparator (17).

5. A knock sensing system according to any one of Claims 1, 3 and 4 characterised in that the sensor comprises a probe (10) adapted to be mounted in the cylinder head of the engine so that the inner end of the probe observes the combustion of fuel in the engine cylinder, a radiation detector (12) and an optical cable (11) which connects the outer end of the probe with the detector.

FIG.1.

FIG.2.

FIG.3.

FIG. 4.

FIG.5.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-4444043 (NIPPON SOKEN INC) <br> * column 2, line 22 - column 5, line 37; figures 1-5 * | 1-5 | G01L23/22 <br> F02B77/08 |
| X | EP-A-58390 (PISCHINGER) <br> * page 9, line 10 - page 12, line 16; figures 3-6 * | 1, 2, 5 | |
| A | | 3, 4 | |
| A | US-A-3978720 (LUMENITION LIMITED) <br> *abstract; fig 1,2* | 1, 2, 5 | |
| A | DE-A-3112327 (R.BOSCH GMBH) <br> *abstract* | 1, 2, 5 | |

TECHNICAL FIELDS SEARCHED (Int. Cl.5 )

F02B
G01L

The present search report has been drawn up for all claims

| Place of search | Date of completion of the search | Examiner |
|---|---|---|
| THE HAGUE | 10 MAY 1990 | MOUTON J.M.M.P. |